# EUROPÄISCHE PATENTANMELDUNG

(11) **EP 2 752 574 A2**
(43) Veröffentlichungstag der Anmeldung: **09.07.2014**
(21) Anmeldenummer: 13005729.2
(22) Anmeldetag: 09.12.2013
(51) Int. Cl.: F02G 5/02, F02B 63/04

(54) **Vorrichtung und Verfahren zum bereitstellen von Nutzwärme sowie verwendung einer Kraftwärmemaschine dabei**

(30) Priorität: 07.12.2012 DE 202012011715 U
(71) Anmelder: Stadtwerke Langenfeld GmbH, 40764 Langenfeld (DE)
(72) Erfinder: Weiß, Reinhard, 40764 Langenfeld (DE)
(74) Vertreter: GROSSE SCHUMACHER KNAUER VON HIRSCHHAUSEN

(57) **Zusammenfassung**

Die Erfindung betrifft eine Vorrichtung (1) zum Bereitstellen von Nutzwärme (3) und/oder elektrischer Energie, insbesondere zum Beheizen eines Volumens, wie etwa eines Gebäudes oder Gebäudeteils (2), etwa eines Raums. Die Vorrichtung umfasst eine Wärme erzeugenden Energieeinrichtung (5) zum Bereitstellen von Nutzwärme (3) und/oder elektrischer Energie. Die Vorrichtung (1) umfasst ferner eine Kraftwärmemaschine (6), welcher zumindest ein Teil der Wärme so zuführbar ist, dass aus der der Kraftwärmemaschine (6) zugeführten Wärme Nutzwärme (3) erzeugbar ist.

## Beschreibung

Die Erfindung betrifft eine Vorrichtung zum Bereitstellen von Nutzwärme und/oder elektrischer Energie nach dem Oberbegriff des Anspruchs 1. Die Nutzwärme kann als Heizwärme in einer Anlage zum Beheizen eines Gebäudes oder Gebäudeteils, etwa eines Raums, verwertet werden oder zumindest anteilig als Prozesswärme für beliebige Prozesse der Wärmetechnik, insbesondere haustechnische Prozesse. Die Vorrichtung ist insbesondere zum Beheizen eines Volumens, wie etwa eines Gebäudes oder Gebäudeteils, geeignet. Die Vorrichtung umfasst eine Wärme erzeugenden Energieeinrichtung zum Bereitstellen von Nutzwärme respektive Prozesswärme und/oder elektrischer Energie. Bei der Wärme erzeugenden Energieeinrichtung kann es sich beispielsweise um ein Blockheizkraftwerk (BHKW) handeln.

Im Übrigen betrifft die Erfindung eine Verwendung einer Kraftwärmemaschine nach dem Oberbegriff des Anspruchs 10. Die Kraftwärmemaschine kann als Wärmepumpe gebildet sein. Die Kraftwärmemaschine ist zum Erzeugen thermischer Energie eines höheren Energieniveaus aus thermischer Energie eines niedrigeren Energieniveaus geeignet.

Die Erfindung betrifft auch ein Verfahren zum Beheizen eines Volumens mit Nutzwärme respektive Prozesswärme nach dem Oberbegriff des Anspruchs 15. Das Volumen kann ein Gebäude betreffen oder einen Gebäudeteil, etwa eine Etage oder einen oder mehrere Räume. Es können aber auch kleine Volumina wie Behälter oder Kabinen, etwa von Fahrzeugen, vorgesehen sein. Bei dem Verfahren wird mit einer Energieeinrichtung in einem Gehäuse zumindest thermische Energie erzeugt. Es können zusätzlich andere Energieformen erzeugt werden, beispielsweise elektrische Energie. Bei dem Verfahren wird die Nutzwärme aus einem Teil der thermischen Energie aus der Energieeinrichtung gebildet. Die nicht als Nutzwärme gebildete thermische Energie wird als Abwärme der Energieeinrichtung gebildet, wobei die Abluft der Energieeinrichtung Wärmeträger der Abwärme ist.

Ferner betrifft die Erfindung ein Verfahren zur Effizienzsteigerung einer Energieeinrichtung, insbesondere eines Blockheizkraftwerks, nach dem Oberbegriff des Anspruchs 20 sowie des Anspruchs 21, wobei die Energieeinrichtung in einem Gehäuse Wärme erzeugt, die Nutzwärme respektive Prozesswärme und Abwärme umfasst.

Schließlich betrifft die Erfindung eine Verwendung eines Schallschutzgehäuses oder eines Übersee-Containers als Einhausung (33) nach Anspruch 22.

### TECHNOLOGISCHER HINTERGRUND

Beim Beheizen eines im Wesentlichen geschlossenen Volumens, wie beispielsweise eines Gebäude oder eines Gebäudeteils, also einem Raum oder einer Halle, kann eine Heizvorrichtung verwendet werden, bei der beispielsweise mit elektrischem Strom Wärme erzeugt wird. Diese Wärme wird an das Volumen als Nutzwärme respektive Prozesswärme abgegeben. Bei steigenden Stromkosten werden Alternativen interessant, bei denen statt der (Strom-)Heizung andere Energieeinrichtungen vorgesehen sind, mit denen Wärme erzeugbar ist. Diese Energieeinrichtungen können beispielsweise auf dem Prinzip der Kraft-Wärme-Kopplung beruhen, wobei gleichzeitig mechanische Energie und Wärme erzeugt werden. Die Wärme kann als Nutzwärme, das heißt als Heizwärme oder Prozesswärme, bereitgestellt werden. Durch Einsatz der mechanischen Energie kann gleichzeitig Strom erzeugt werden. Der erzeugte Strom kann in das Gebäudestromnetz oder in das öffentliche Stromnetz eingespeist werden, wodurch ein Teil der Unkosten für den Betrieb der Energieeinrichtung kompensiert werden können.

Nachteilig bei derartigen Vorrichtungen und Verfahren zum Beheizen eines Volumens basierend auf einer Kraft-Wärme-Kopplung ist die Entstehung von Abwärme bei der Energie-Umsetzung und bei der Umwandlung von mechanischer Energie in thermische oder elektrische Energie. Dies ist insbesondere dann der Fall, wenn die Energieeinrichtung ein Blockheizkraftwerk umfasst, in dem aus chemischer Energie - gespeichert in Brennstoffen - zunächst durch Verbrennung mechanische und thermische Energie erzeugt wird, und daraus mittels eines Generators elektrische Energie. Die dabei entstehende Abwärme wird in die Umgebung ungenutzt abgegeben. Die in die Umgebung abgeführte Abwärme kann zum weiteren Energieumsatz keinen Beitrag leisten. Hier setzt die Erfindung ein.

### DARSTELLUNG DER ERFINDUNG

Der Erfindung liegt die Aufgabe zugrunde, die Effizienz von Energieeinrichtungen, die beispielsweise ein Blockheizkraftwerk umfassen, zu steigern.

Diese Aufgabe wird durch eine Vorrichtung zum Bereitstellen von Nutzwärme (Prozesswärme) und/oder elektrischer Energie nach Anspruch 1 gelöst. Demnach ist vorgesehen, dass die Vorrichtung eine Kraftwärmemaschine umfasst, welcher zumindest ein Teil der Wärme so zuführbar ist, dass aus der der Kraftwärmemaschine zugeführten Wärme Nutzwärme respektive Prozesswärme erzeugbar ist. Indem die Vorrichtung die Kraftwärmemaschine umfasst, ist die Kraftwärmemaschine Bestandteil der Vorrichtung zum Bereitstellen von Nutzwärme und/oder elektrischer Energie. Die Kraftwärmemaschine ist insbesondere auf die Energieeinrichtung und auf deren erzeugte Wärme abgestimmt. Die apparative respektive fluidische Kombination aus Kraftwärmemaschine und Energieeinrichtung bildet demnach einen wesentlichen Bestandteil der Vorrichtung zum Bereitstellen von Nutzwärme und/oder elektrischer Energie.

Die Effizienzsteigerung ergibt sich unter anderem dadurch, dass die für den Betrieb der Kraftwärmemaschine erforderliche Energie über die Energieeinrichtung kostengünstig zur Verfügung gestellt werden kann. Sofern die Energieeinrichtung ein Blockheizkraftwerk (BHKW) umfasst, kann kostengünstiger BHKW-Strom zum Betrieb der Kraftwärmemaschine umgesetzt werden. Gesetzliche Umlagen und z. B. Netznutzungsentgelte fallen dabei in geringerem Maße an oder entfallen vollständig.

Zum Zweck der thermischen und/oder akustischen Isolierung kann die Energieeinrichtung und/oder die Kraftwärmemaschine ein Gehäuse aufweisen. Dabei kann es sich um ein Schallschutzgehäuse handeln oder das Gehäuse kann auf einem Schallschutzgehäuse basieren. Bevorzugt kann eine Einhausung der Vorrichtung vorgesehen sein, d. h. ein Vorrichtungsgehäuse, in dem die gesamte Vorrichtung einschließlich der Energieeinrichtung und der Kraftwärmemaschine angeordnet ist.

Bei der Einhausung kann es sich um einen Container handeln, etwa ein Übersee-Container. Die Einhausung der Vorrichtung respektive der Container der Vorrichtung wird beispielsweise in einem Heizraum oder in einer Heizzentrale aufgestellt. Alternativ können die Energieeinrichtung und die Kraftwärmemaschine jeweils in einem Gehäuse angeordnet sein, wobei die Gehäuse aneinander angeordnet sein können und/oder zumindest (in fluidischer Weise) miteinander verbunden sein können. Auch bei dem Gehäuse der Energieeinrichtung kann es sich um einen (Über-see-)Container handeln, der in einem Heizraum oder in einer Heizzentrale aufstellbar ist.

Die verwendete Kraftwärmemaschine kann als Wärmepumpe gebildet sein. Die Energieeinrichtung kann ein Blockheizkraftwerk umfassen. Die Kraftwärmemaschine und die Energieeinrichtung können fluidisch miteinander verbunden und hinsichtlich des Energieumsatzes aufeinander abgestimmt sein.

Zum Austausch der (Ab-)Luft in dem Gehäuse der Energieeinrichtung und/oder der Vorrichtung kann zumindest eine Öffnung vorgesehen sein. Bei der Öffnung kann es sich um eine Abluft- und/oder Zuluftöffnung handeln. Bevorzugt umfasst die Vorrichtung eine Zuluftöffnung und eine Abluftöffnung.

Über die Abluft- und/oder Zuluftöffnung wird ein Luftwechsel erreicht. Die aus der Abluftöffnung strömende, durch die Abwärme der Energieeirichtung respektive der Aggregate und Komponenten der Energieeinrichtung erwärmte, Luft ist einer direkt mit dem Gehäuse (Container) verbundenen Kraftwärmemaschine (Wärmepumpe) zuführbar. Demnach bildet die Abluft aus der Energieeinrichtung die Zuluft zur Kraftwärmemaschine. Die Kraftwärmemaschine (Wärmepumpe) entzieht der Abluft der Energieeinrichtung Wärme. Anschließend kann die durch die Kraftwärmemaschine gekühlte Abluft der Energieeinrichtung in die Energieeinrichtung als kühlende Zuluft zurückgeführt werden. Es ist insbesondere im Hinblick auf das Kühlen der Energieeinrichtung ein geschlossener Kreislauf des Wärmeträgers (Abluft) zweckmäßig. Die der Abluft entzogene Wärme wird mittels der Kraftwärmemaschine (Wärmepumpe) in ein höheres Temperaturniveau überführt und kann je nach Temperaturniveau in dem Objekt respektive Gebäude genutzt werden.

Es ist empfehlenswert, wenn Energieeinrichtung (Blockheizkraftwerk) und Kraftwärmemaschine (Wärmepumpe) aufeinander abgestimmt sind. Die Wärmepumpe kann direkt an den Container der Energieeinrichtung angebaut werden oder darin integriert werden (der Container bildet dann die gemeinsame Einhausung). Die Energieeinrichtung (Blockheizkraftwerk) und die Kraftwärmemaschine (Wärmepumpe) bilden eine Systemlösung, welche etwa beim Hersteller der Energieeinrichtung (Blockheizkraftwerk) konfiguriert werden kann. Das Ausliefern der konfigurierten Systemlösung erfolgt vom Hersteller der Energieeinrichtung. Die Systemlösung arbeitet energieeffizient und bedarf keiner Anpassung an örtliche Gegebenheiten.

Die Wärme kann aus der Energieeinrichtung mit einem Wärmeträger, etwa mit einem Fluid, abgeführt werden. Der Wärmeträger kann beispielsweise ein Gas oder eine Flüssigkeit umfassen. Sofern die Wärme mit einem Gas als Wärmeträger förderbar ist, kann der Wärmeträger aus Luft gebildet sein, etwa aus Abluft. Das wärmetragende Fluid kann mit zumindest einer Fördereinrichtung förderbar sein, wobei die Fördereinrichtung zumindest eine Pumpe und/oder zumindest ein Gebläse oder einen Ventilator umfassen kann.

Bevorzugt umfasst die Wärme Abwärme, die bei dem Bereitstellen von Nutzwärme und/oder elektrischer Energie und/oder beim Fördern von Nutzwärme erzeugbar ist. Die Abwärme kann der Kraftwärmemaschine zuführbar sein. Die Abwärme kann in einer oder mehreren Komponenten respektive Aggregaten der Vorrichtung, insbesondere der Energieeinrichtung, gebildet werden. Ferner kann die Abwärme Rohrleitungen entstammen oder dort gebildet sein, in denen ein erhitztes Fluid geführt wird.

Gemäß einer bevorzugten Ausgestaltung der erfindungsgemäßen Vorrichtung kann die Kraftwärmemaschine eine Wärmepumpe umfassen oder daraus gebildet sein. Dabei kann insbesondere eine Luft-Wasser-Wärmepumpe vorgesehen sein. Mit einer Wärmepumpe ist eine Vorrichtung gemeint, in der ein Medium respektive ein Wärmeträger (oder ein Kältemittel) einen "linkslaufenden" thermodynamischen Kreisprozess durchläuft. Demnach wird unter einem Arbeitsaufwand Wärme von einem kälteren thermischen Energieniveau einem wärmeren Energieniveau zugeführt. Der Arbeitsaufwand kann darin bestehen, dass ein Kältemittel gefördert und/oder komprimiert wird, wobei es sich bei dem Kältemittel um Wasser oder ein anderes Fluid handeln kann. Bei einer Luft-Wasser-Wärmepumpe wird einem Gasmedium, beispielsweise der Umgebungsluft der Wärmepumpe, thermische Energie entzogen. Dafür kann ein Wärmetauscher vorgesehen sein, der die dem Gasmedium entzogenen Wärme einem flüssigen Medium, insbesondere einem Wasserkreislauf, zuführt. In der Wärmepumpe kann außerdem ein Phasenwechsel des Kältemittels vorgesehen sein, der beispielsweise durch zyklische Kompression/Entspannung des Kältemittels assistiert sein kann. Zur Entspannung des Kältemittels kann eine an sich bekannte Drosselvorrichtung vorgesehen sein.

Wenn die Kraftwärmemaschine der erfindungsgemäßen Vorrichtung mit elektrischer Energie betreibbar ist, welche der elektrischen Energie von der Energieeinrichtung entnehmbar ist, ergibt sich - neben einem wirtschaftlichen Vorteil - eine besondere Effizienzsteigerung der Vorrichtung. Beispielsweise kann die zur Kompression eines geeigneten Kältefluids erforderliche (elektrische) Pumpenergie von der Energie entnommen werden, die von der Energieeinrichtung erzeugt wird. Die Wärmepumpe der erfindungsgemäßen Vorrichtung wird demnach mit Eigenenergie betrieben. Wird von der Energieeinrichtung beispielsweise elektrischer Strom erzeugt, kann die (mit elektrischem Strom betriebene) Kraftwärmemaschine mit Eigenstrom betrieben werden, das heißt mit Strom aus der Vorrichtung, die die Kraftwärmemaschine umfasst.

Bevorzugt kann die Energieeinrichtung eine Antriebseinrichtung zum Bereitstellen mechanischer Energie und Nutzwärme und eine Generatoreinrichtung zum Bereitstellen elektrischer Energie umfassen. Damit kann die Energieeinrichtung zur Kraft-Wärme-Kopplung (KWK) geeignet sein. Die Generatoreinrichtung kann zur Umsetzung mechanischer Energie (von der Antriebseinrichtung) in elektrische Energie geeignet sein. Beispielsweise kann durch die Generatoreinrichtung mechanische Energie der Antriebseinrichtung in elektrischen Strom umgesetzt werden. Die Energieeinrichtung kann eine an sich bekannte Vorrichtung zur Kraft-Wärme-Kopplung (KWK) wie etwa ein Blockheizkraftwerk (BHKW) umfassen.

Die Antriebseinrichtung kann bevorzugt einen Motor, insbesondere einen Verbrennungsmotor umfassen. Die mechanische Verbindung zwischen der Antriebseinrichtung und der Generatoreinrichtung kann über eine Welle erfolgen. Der Verbrennungsmotor kann mit Gas oder Öl oder anderen Brennstoffen betrieben werden, die der Vorrichtung über eine Brennstoffzuführung zuführbar sind.

Gemäß einer weiteren vorteilhaften Ausgestaltung der Erfindung umfasst die Vorrichtung zumindest eine Kühleinrichtung. Die Kühleinrichtung dient zum Kühlen der Vorrichtung und/oder zum Kühlen der Energieeinrichtung respektive der Antriebseinrichtung. Insbesondere dient die Kühleinrichtung zum Kühlen des Verbrennungsmotors. Der Kühleinrichtung kann zumindest ein Wärmetauscher zugeordnet sein, insbesondere ein Kühlwasserwärmetauscher und/oder ein Abgaswärmetauscher. Die über den oder die Wärmetauscher von einem oder mehreren Aggregaten der Vorrichtung entnommene Wärme wird beispielsweise der Nutzwärme der Energieeinrichtung zugeführt. Zusätzlich oder alternativ kann die Kühleinrichtung einen oder mehrere Ventilatoren umfassen, die ein erhitztes Gasmedium fluidisch fördern oder abführen. Sofern wie oben beschrieben die Abluft durch die Kraftwärmemaschinen gekühlt wird und als gekühlte Luft der Energieeinrichtung zuführbar ist, kann die Kühleinrichtung vereinfacht werden oder als Notfall-Kühleinrichtung für Betriebszustände außerhalb des Normbetriebs vorgesehen sein. Etwaige Lüftungskanäle zum Abführen gestauter Wärme oder dabei assistierende Ventilatoren können vergleichsweise klein und einfach dimensioniert werden oder es kann darauf ganz verzichtet werden. Auch hierdurch wird eine Effizienzsteigerung erreicht, da der Kühlaufwand geringer wird und für eine etwaige Kühlung keine oder kaum Energie aufgewendet werden muss.

Eine Steigerung der Effizienz von Energieeinrichtungen wird auch durch die Verwendung einer Kraftwärmemaschine gemäß Anspruch 10 erreicht. Demnach ist zum Bereitstellen thermischer Energie eines höheren Energie- oder Temperaturniveaus aus thermischer Energie eines niedrigeren Energie- oder Temperaturniveaus vorgesehen, dass die thermische Energie eines niedrigeren Energie- oder Temperaturniveaus aus der Abwärme einer Energieeinrichtung entnehmbar ist. Die thermische Energie des niedrigeren Energie- oder Temperaturniveaus kann in einem Wärmeträger, etwa einem gasförmigen Medium, enthalten sein. Bei dem Energieumsatz zu thermischer Energie des höheren Energie- oder Temperaturniveaus kann ein Medium beteiligt sein, dass sich zumindest während eines Prozessabschnitts in thermischem Gleichgewicht mit dem Wärmeträger befindet. Es ist ferner vorgesehen, dass die Energieeinrichtung insbesondere eine Abwärme erzeugende Vorrichtung zur Kraft-Wärme-Kopplung umfasst.

Bevorzugt sind die Kraftwärmemaschine und die Energieeinrichtung in einem gemeinsamen Gehäuse angeordnet, so dass die Abwärme nicht oder nur wenig in die Umgebung diffundieren kann.

Eine besondere Effizienzsteigerung ergibt sich, wenn die Kraftwärmemaschine, welche zum Betrieb elektrische Energie benötigt, die benötigte elektrische Energie von einer elektrische Energie erzeugenden Energieeinrichtung entnimmt.

Eine Steigerung der Effizienz von Energieeinrichtungen wird auch durch ein Verfahren zum Beheizen eines Volumens, eines Gebäudes oder eines Gebäudeteils mit Nutzwärme und/oder Prozesswärme gemäß Anspruch 15 erreicht. Demnach ist vorgesehen, dass zumindest ein Teil Abluft mit der Abwärme aus dem Gehäuse der Energieeinrichtung einer Kraftwärmemaschine zugeführt wird, und dass die der Kraftwärmemaschine zugeführte Abwärme in der Kraftwärmemaschine zumindest anteilig zu zusätzlicher Nutzwärme und/oder Prozesswärme umgesetzt wird, die der Nutzwärme und/oder Prozesswärme der Energieeinrichtung zugeführt wird, wodurch die Abluft gekühlt wird. Die gekühlte Abluft wird dem Gehäuse der Energieeinrichtung zugeführt.

Die Energieeinrichtung kann eine Kraft-Wärme-Kopplung umsetzen. Die Energieeinrichtung kann zumindest komponentenweise gekühlt werden. Das Kühlen kann mit Wärmetauschern erfolgen.

Die Kraft-Wärme-Kopplung kann das Antreiben eines Generators umfassen. Es kann eine Antriebseinrichtung vorgesehen sein, mit der eine Generatoreinrichtung angetrieben wird. Beim Antreiben der Generatoreinrichtung wird thermische Energie erzeugt. In der Generatoreinrichtung wird elektrische Energie erzeugt, wobei zumindest mit einem Teil dieser elektrischen Energie die Kraftwärmemaschine angetrieben wird.

Die Abwärme der Energieeinrichtung kann bei einer bevorzugten Ausgestaltung des erfindungsgemäßen Verfahrens zumindest anteilig über einen Wärmeträger mit einer Fördereinrichtung zu der Kraftwärmemaschine gefördert werden. Der Wärmeträger kann ein Gas oder Gasgemisch umfassen. Die Fördereinrichtung kann zumindest einen Ventilator umfassen.

Bevorzugt kann die Kraftwärmemaschine eine Gas-Flüssigkeit-Wärmepumpe umfassen, insbesondere eine Luft-Wasser-Wärmepumpe. Dabei wird thermische Energie der Abwärme über ein Gas, insbesondere über Luft, auf ein flüssiges Kältemittel, insbesondere Wasser, übertragen.

Das Verhältnis der durch das Verfahren erzeugten Nutzwärme zu der dem Verfahren zugeführten Energie wird als Arbeitszahl oder Leistungszahl bezeichnet (oder engl.: Coefficient of Performance, COP). Durch die Kombination eines Blockheizkraftwerkes mit einer Wärmepumpe kann die Gesamtleistungszahl des Verfahrens und/oder der Vorrichtung, mit der das Verfahren durchgeführt wird, verbessert werden. Dies umso mehr als der Kraftwärmemaschine respektive der Wärmepumpe kontinuierlich thermische Energie zugeführt wird, die kontinuierlich in Nutzwärme umsetzbar ist. Sofern die Energieeinrichtung kontinuierlich arbeitet, wird in der Energieeinrichtung kontinuierlich Abwärme erzeugt, so dass die Temperatur des Wärmeträgers, der von der Energieeinrichtung zu der Kraftwärmemaschine förderbar ist, konstant oder nahezu konstant ist. Dadurch wird die Kraftwärmemaschine so betrieben, dass Schwankungen beim Energieumsatz vermieden werden, wodurch ein weiterer Beitrag zur Steigerung der Effizienz geleistet wird.

Eine Steigerung der Effizienz von Energieeinrichtungen wird auch durch ein Verfahren gemäß Anspruch 20 erreicht. Demnach wird durch eine Energieeinrichtung, insbesondere durch ein Blockheizkraftwerk, Wärme erzeugt, die Nutzwärme und/oder Prozesswärme sowie Abwärme umfasst. Die Abwärme wird innerhalb einer eine Kraftwärmemaschine umfassenden Einhausung zum Umsetzen in Nutzwärme und/oder Prozesswärme zugeführt, wobei sich das Gehäuse in der Einhausung befindet.

Eine Steigerung der Effizienz von Energieeinrichtungen wird auch durch ein Verfahren gemäß Anspruch 21 erreicht. Demnach wird die Abwärme zum Umsetzen in Nutzwärme und/oder Prozesswärme einer an dem Gehäuse der Energieeinrichtung anordbaren Kraftwärmemaschine zugeführt.

Eine Steigerung der Effizienz von Energieeinrichtungen wird auch durch die Verwendung eines Schallschutzgehäuses oder eines Übersee-Containers als Einhausung nach Anspruch 22 erreicht. Demnach ist eine Verwendung eines Schallschutzgehäuses oder eines Übersee-Containers für eine oben beschriebene Vorrichtung zum Bereitstellen von Nutzwärme und/oder elektrischer Energie vorgesehen, oder für ein ebenfalls oben beschriebenes Verfahren zum Beheizen eines Volumens, insbesondere eines Gebäudes oder eines Gebäudeteils, mit Nutzwärme und/oder Prozesswärme.

Durch die erfindungsgemäße Vorrichtung, das erfindungsgemäße Verfahren und durch die erfindungsgemäße Verwendung einer Kraftwärmemaschine ergibt sich neben der Effizienzsteigerung bei dem Energieumsatz und der Erzeugung von Nutzwärme zumindest folgender wirtschaftliche Vorteil: Zum Betrieb der Wärmepumpe bedarf es keines Bezugs von elektrischem Strom aus dem (gebäudeinternen oder öffentlichen) Stromnetz. Zwar bieten Betreiber öffentlicher Stromnetze günstige Wärmepumpen-Tarife an, jedoch entfallen bei den vorbeschriebenen erfindungsgemäßen Maßnahmen die darin enthaltenen Netznutzungsentgelte, die staatlichen Kosten, wie etwa die Steuer sowie diverse Umlagen (EEG-Umlage, KWK-Umlage) und etwaige Konzessionsabgaben gänzlich.

Gemäß der Erfindung kann die Kraftwärmemaschine respektive die Wärmepumpe kostengünstig mit Eigenstrom, das heißt zu den reinen Stromerzeugungskosten, betrieben werden, da sie Ihren Strombedarf aus dem erfindungsgemäß erzeugten Strom des Blockheizkraftwerks decken kann. Es ergibt sich daher neben der verbesserten Energiebilanz und der gesteigerten (Energie-)Effizienz ein zusätzlicher wirtschaftlicher Nutzen.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel einer erfindungsgemäßen Vorrichtung respektive eines erfindungsgemäßen Verfahrens dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

In der Zeichnung zeigen:
- Fig. 1: Eine Vorrichtung zum Beheizen eines Gebäudes oder Gebäudeteils in schematischer Darstellung, und
- Fig. 2: eine alternative Ausgestaltung einer Vorrichtung zum Beheizen eines Gebäudes oder Gebäudeteils in schematischer Darstellung..

### DETAILLIERTE BESCHREIBUNG VON AUSFÜHRUNGSBEISPIELEN

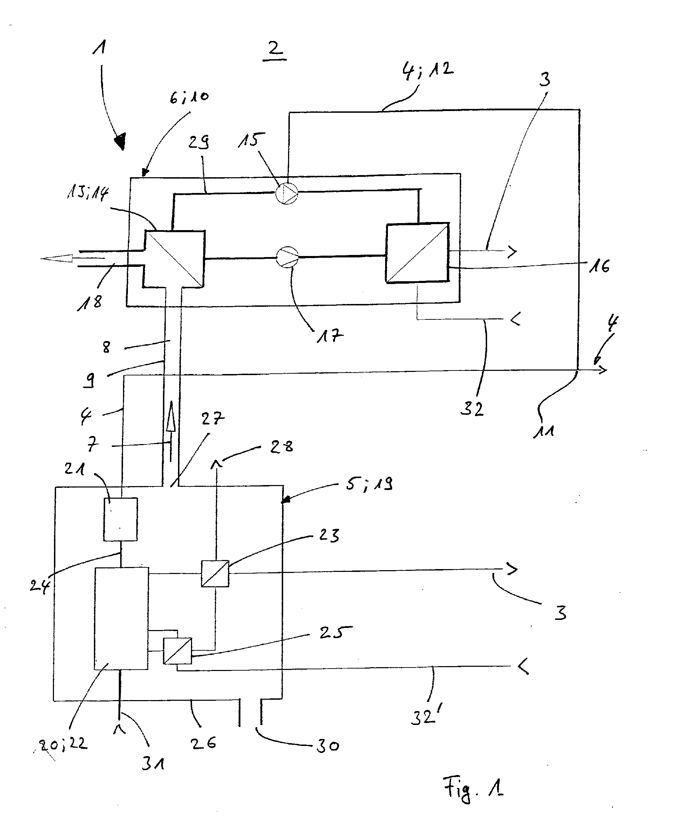

Eine schematische Darstellung einer Vorrichtung 1 zum Beheizen eines Gebäudes oder eines Gebäudeteils 2 kann der Fig. 1 entnommen werden. Mit der Vorrichtung 1 wird Nutzwärme 3 respektive Prozesswärme 3 bereitgestellt, mit der ein Gebäudeteil 2 beheizbar ist. Ferner ist mit der in Fig. 1 dargestellten Vorrichtung 1 elektrische Energie als elektrischer Strom 4 erzeugbar. Der erzeugte elektrische Strom 4 kann zumindest anteilig in ein elektrisches Stromnetz eingespeist werden, beispielsweise in das gebäudeinterne Stromnetz oder in das öffentliche Stromnetz. Wahlweise können mit dem erzeugten elektrischen Strom 4 externe Elektrogeräte oder elektrische Aggregate, insbesondere Aggregate der Gebäudetechnik, betrieben werden. Der Strom kann auch in einem Stromspeicher wie etwa einer Batterie oder einem Akku oder Ähnlichem gespeichert werden.

Die Vorrichtung 1 gemäß Fig. 1 umfasst eine Energieeinrichtung 5, mit der Wärme erzeugbar ist. Zumindest ein Teil der von der Energieeinrichtung 5 erzeugten Wärme wird zum Beheizen des Gebäudeteils 2 als Nutzwärme (Prozesswärme) 3 verwendet.

Zumindest ein Teil der von der Energieeinrichtung 5 erzeugten Wärme ist einer Kraftwärmemaschine 6 zuführbar. Aus der der Kraftwärmemaschine 6 zugeführten Wärme wird Nutzwärme 3 erzeugt. Die Nutzwärme wird einem Nutzwärmefluid zugeführt, das über eine Rückführung 32 in die Kraftwärmemaschine 6 zurückführbar ist.

Die von der Energieeinrichtung 5 erzeugte Wärme umfasst neben der Nutzwärme 3 zusätzlich Abwärme 7. Die Abwärme 7 wird erzeugt beim Bereitstellen der Nutzwärme 3, beim Bereitstellen der elektrischen Energie und/oder beim Fördern der Nutzwärme 3. Die Abwärme 7 ist der Kraftwärmemaschine 6 fluidisch zuführbar. Das Zuführen der Abwärme 7 zur Kraftwärmemaschine 6 erfolgt mittels eines Wärmeträgers 8, der ein Gas oder Gasgemisch enthält oder aus einem Gas oder Gasgemisch wie etwa Luft gebildet ist. Das Gas wird in einem Kanal 9 geführt, der die Energieeinrichtung 5 und die Kraftwärmemaschine 6 fluidisch miteinander verbindet.

Die Kraftwärmemaschine 6 gemäß Fig. 1 ist als (Luft-Wasser-)Wärmepumpe 10 gebildet. Die elektrische Energie zum Betreiben der Wärmepumpe 10 wird derjenigen elektrischen Energie entnommen, die von der Energieeinrichtung 5 erzeugt wird. Hierzu können eine Energieabzweigung 11 und eine entsprechende Energieleitung 12 vorgesehen sein. In der Wärmepumpe 10 gelangt der Wärmeträger 8 in thermischen Kontakt mit einem in der Kraftwärmemaschine zirkulierenden Medium, etwa einem Kältemittel 29. Das Kältemittel 29 durchläuft einen Kreislauf mit einem Verdampfer 13, der einen Wärmetauscher umfasst. In dem Wärmepumpenkreislauf wird das Kältemittel 29 in einem Verdichter oder Kompressor 15 verdichtet und von dort zu einem Verflüssiger 16 gefördert. Über eine Drossel- oder Entspannungsvorrichtung 17 wird das Kältemittel 29 zurück zum Verdampfer 13 oder zu einer Abluftöffnung 18 aus der Vorrichtung 1 heraus gefördert.

In der Wärmepumpe 10 wird dem mit dem Wärmeträger 8 in thermischem Kontakt stehenden Kältemittel 29 insbesondere im Bereich des Verflüssigers 16 thermische Energie entnommen, die der von der Energieeinrichtung 5 erzeugten Nutzwärme 3 zugeführt wird. Insgesamt wird die Arbeitszahl der Vorrichtung 1 daher erhöht und es kann mit höherer Effizienz Nutzwärme 3 erzeugt werden.

Die Energieeinrichtung 5 umfasst ein Blockheizkraftwerk 19 (BHKW) mit einer Antriebseinrichtung 20 und einer Generatoreinrichtung 21. Die Antriebseinrichtung 20 umfasst einen Verbrennungsmotor 22, der Wärme, Abgase und mechanische Energie erzeugt. Der Verbrennungsmotor 22 wird mit einem Brennstoff wie etwa Gas, Öl oder einem (petrochemischen) Kraftstoff betrieben. Der Brennstoff ist mit einer Brennstoffzuführung 31 in die Vorrichtung 1 zuführbar. Die Wärme wird zumindest teilweise als Nutzwärme 3 bereitgestellt und aus der Energieeinrichtung 5 dem Gebäudeteil 2 zugeführt. Die Nutzwärme 3 wird einem Nutzwärmefluid zugeführt, das über eine Rückführung 32' in die Vorrichtung 1, insbesondere in die Energieeinrichtung 5, zurückführbar ist. Die Wärme der Abgase wird über einen Abgaswärmetauscher 23 zumindest anteilig der Nutzwärme hinzugefügt. Mit der mechanischen Energie der Antriebseinrichtung 20 wird eine Generatoreirichtung 21 betrieben, in der zumindest ein Teil der mechanischen Energie in elektrische Energie umgesetzt wird.

Die Antriebseinrichtung 20 umfasst einen Verbrennungsmotor 22, in dem Brennstoff verbrannt wird. Die in dem Brennstoff enthaltene chemische Energie wird in mechanische Energie umgewandelt, indem eine Welle 24 angetrieben wird. Die Welle 24 ist mechanisch mit einem Generator 21 verbunden, in dem die mechanische Energie in elektrische Energie umgesetzt wird.

Die Vorrichtung 1 umfasst eine Kühleinrichtung, mit der zumindest die Antriebseinrichtung 20 kühlbar ist. Zum Kühlen der Antriebseinrichtung 20 wird ein Kühlmittel, beispielsweise Wasser, zirkuliert, wobei Wärme aus der Antriebseinrichtung 20 auf das Kühlmittel übertragen wird. Die Wärme, die die Kühleinrichtung der Antriebseinrichtung 20 entnimmt, wird mit einem Kühlmittelwärmetauscher 25 umgesetzt und zumindest teilweise der Nutzwärme 3 hinzugefügt.

Die Energieeinrichtung 5 ist in einem Gehäuse 26 angeordnet, so dass die vom Verbrennungsmotor 22 erzeugte Wärme und/oder der vom Verbrennungsmotor 22 und vom Generator 21 erzeugte Schall in dem Gehäuse 26 überwiegend absorbiert werden und nur wenig Wärme respektive Schall in die Umgebung (2) der Vorrichtung 1 gelangt. Die Vorrichtung 1 arbeitet dadurch nicht nur leiser sondern auch effizienter, da die Abwärme - wie beschrieben - nutzbar ist.

Das Gehäuse der Vorrichtung 1 und/oder das Gehäuse der Energieeinrichtung 5 können eine oder mehrere Öffnungen umfassen. Die Öffnungen können geeignet sein, die Aggregate in dem Gehäuse mit Zuluft zu versorgen. Es können eine Abluftöffnung 27, eine Zuluftöffnung 30 und/oder eine Öffnung für die etwaige von der Energieeinrichtung 5 erzeugte Abgase 28 vorgesehen sein.

Der schematischen Darstellung gemäß Fig. 1 kann auch ein Verfahren zum Beheizen eines Gebäudeteils mit Nutzwärme entnommen werden, bei dem mit der Energieeinrichtung zumindest thermische Energie erzeugt wird, und bei dem die Nutzwärme aus einem Teil der thermischen Energie gebildet wird. Der Energieeinrichtung ist als Blockheizkraftwerk 19 gebildet. Die nicht als Nutzwärme gebildete thermische Energie des Blockheizkraftwerks, das heißt die Abwärme der Energieeinrichtung wird einer Wärmepumpe 10 zugeführt, wo sie zumindest anteilig in Nutzwärme umgesetzt wird. Zum Fördern des Wärmeträgers von dem Blockheizkraftwerk 19 zur Wärmepumpe 10 kann ein Gebläse oder ein Ventilator vorgesehen sein.

Durch die Verwendung der Wärmepumpe 10 zur Nutzung der Abwärme des Blockheizkraftwerks 19 wird die Effizienz des Energieumsatzes von chemischer Energie in Nutzwärme erhöht. Denn auch die von dem Blockheizkraftwerk 19 erzeugte Abwärme wird zumindest anteilig in Nutzwärme umgesetzt.

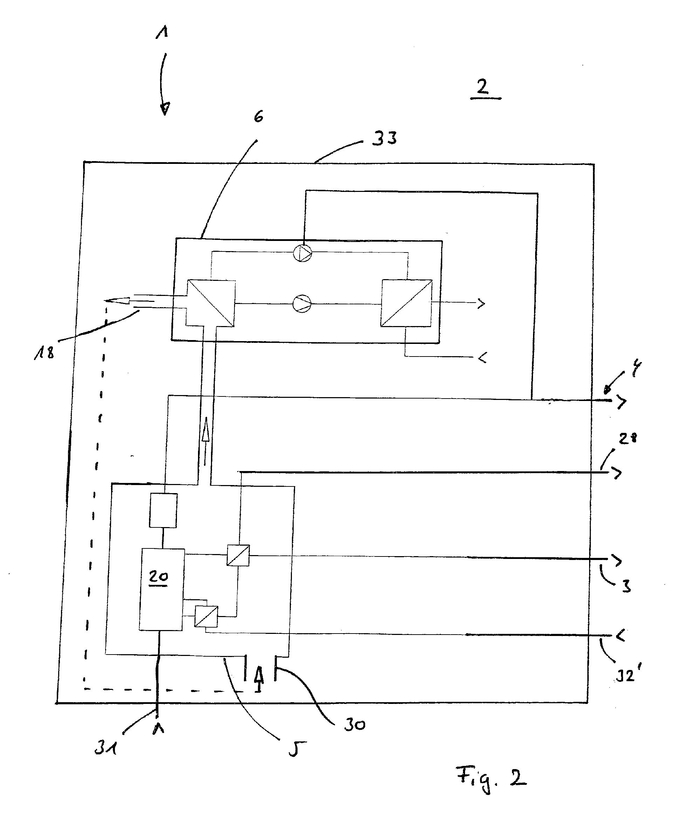

Der Fig. 2 kann ebenfalls eine schematische Darstellung einer Vorrichtung 1 zum Bereitstellen von Nutzwärme und/oder elektrischer Energie entnommen werden. Die Vorrichtung 1 umfasst sämtliche wesentlichen Komponenten gemäß der in Fig. 1 dargestellten Vorrichtung 1. Die Vorrichtung 1 gemäß Fig. 2 ist in einer Einhausung 33 angeordnet, in der die Energieeinrichtung 5 und die Kraftwärmemaschine 6 gemeinsam angeordnet sind. Auf diese Weise ist es möglich, dass die die Kraftwärmemaschine 6 durch die Abluftöffnung 18 verlassende, und durch die Kraftwärmemaschine gekühlte, Luft der Zuluftöffnung 30 der Energieeinrichtung 5 innerhalb eines geschlossenen Systems zuführbar ist, wodurch eine Kühlung der Energieeinrichtung 5 vollständig oder nahezu vollständig entfallen kann.

### BEZUGSZEICHENLISTE

- 1: Vorrichtung
- 2: Gebäudeteil
- 3: Nutzwärme
- 4: elektrischer Strom
- 5: Energieeinrichtung
- 6: Kraftwärmemaschine
- 7: Abwärme
- 8: Wärmeträger
- 9: Kanal
- 10: Wärmepumpe
- 11: Energieabzweigung
- 12: Energieleitung
- 13: Verdampfer
- 14: Wärmetauscher
- 15: Kompressor
- 16: Verflüssiger
- 17: Drossel
- 18: Abluftöffnung
- 19: Blockheizkraftwerk
- 20: Antriebseinrichtung
- 21: Generatoreinrichtung
- 22: Verbrennungsmotor
- 23: Abgaswärmetauscher
- 24: Welle
- 25: Kühlmittelwärmetauscher
- 26: Gehäuse
- 27: Abluftöffnung
- 28: Abgas
- 29: Kältemittel
- 30: Zuluftöffnung
- 31: Brennstoffzuführung
- 32,32': Rückführung
- 33: Einhausung

## Patentansprüche

1. Vorrichtung (1) zum Bereitstellen von Nutzwärme (3) und/oder elektrischer Energie, insbesondere zum Beheizen eines Volumens, wie etwa eines Gebäudes oder Gebäudeteils (2), etwa eines Raums,
mit einer Wärme erzeugenden Energieeinrichtung (5) zum Bereitstellen von Nutzwärme (3) und/oder elektrischer Energie,
**dadurch gekennzeichnet, dass** die Vorrichtung (1) eine Kraftwärmemaschine (6) umfasst, welcher zumindest ein Teil der Wärme so zuführbar ist, dass aus der der Kraftwärmemaschine (6) zugeführten Wärme Nutzwärme (3) erzeugbar ist.

2. Vorrichtung (1) nach Anspruch 1, **dadurch gekennzeichnet, dass** die Energieeinrichtung (5) und/oder die Kraftwärmemaschine (6) ein Gehäuse (26) umfasst, insbesondere ein thermisch und/oder akustisch isolierendes Gehäuse.

3. Vorrichtung (1) nach Anspruch 2, **gekennzeichnet durch** zumindest eine im Gehäuse angeordnete Öffnung, insbesondere eine Abluftöffnung (27) und/oder eine Zuluftöffnung (30).

4. Vorrichtung (1) nach einem der Ansprüche 1 bis 3, **dadurch gekennzeichnet, dass** die Vorrichtung (1) eine, insbesondere thermisch oder akustisch isolierende, Einhausung (33) umfasst, in der die Energieeinrichtung (5) und die Kraftwärmemaschine (6) angeordnet sind.

5. Vorrichtung (1) nach einem der Ansprüche 1 bis 4, **dadurch gekennzeichnet, dass** die Wärme Abwärme (7) umfasst, die bei dem Bereitstellen von Nutzwärme (3) und/oder elektrischer Energie und/oder beim Fördern von Nutzwärme (3) erzeugbar ist, und dass die Abwärme (7) der Kraftwärmemaschine (6) zuführbar ist.

6. Vorrichtung (1) nach einem der Ansprüche 1 bis 5, **dadurch gekennzeichnet, dass** die Kraftwärmemaschine (6) eine Wärmepumpe (10) umfasst oder daraus gebildet ist, insbesondere eine Luft-Wasser-Wärmepumpe.

7. Vorrichtung (1) nach einem der Ansprüche 1 bis 6, **dadurch gekennzeichnet, dass** die Kraftwärmemaschine (6) mit elektrischer Energie betreibbar ist, welche der elektrischen Energie von der Energieeinrichtung (5) entnehmbar ist.

8. Vorrichtung (1) nach einem der Ansprüche 1 bis 7, **dadurch gekennzeichnet, dass** die Energieeinrichtung (5) eine Antriebseinrichtung (20), insbesondere mit einem (Verbrennungs-)Motor (22), zum Bereitstellen mechanischer Energie und Nutzwärme (3) und eine Generatoreinrichtung (21) zum Bereitstellen elektrischer Energie umfasst.

9. Vorrichtung (1) nach einem der Ansprüche 1 bis 8, **dadurch gekennzeichnet, dass** die Vorrichtung (1) zumindest eine Kühleinrichtung umfasst.

10. Verwendung einer Kraftwärmemaschine (6), insbesondere einer Wärmepumpe (10), zum Bereitstellen thermischer Energie eines höheren Energieniveaus durch Umsetzten thermischer Energie eines niedrigeren Energieniveaus, **dadurch gekennzeichnet, dass** die thermische Energie des niedrigeren Energieniveaus aus der Abwärme (7) einer Energieeinrichtung (5) entnehmbar ist, und dass die Energieeinrichtung (5) insbesondere eine Abwärme (7) erzeugende Vorrichtung zur Kraft-Wärme-Kopplung umfasst.

11. Verwendung nach Anspruch 10, **dadurch gekennzeichnet, dass** die Kraftwärmemaschine (6) als Gas-Flüssigkeit-Wärmepumpe gebildet ist, und dass die Energieeinrichtung (5) ein Blockheizkraftwerk (19) umfasst.

12. Verwendung nach Anspruch 10 oder 11, **dadurch gekennzeichnet, dass** die Kraftwärmemaschine (6) und die Energieeinrichtung (5) fluidisch, insbesondere durch einen Kanal (9), miteinander verbunden sind.

13. Verwendung nach einem der Ansprüche 10 bis 12, **dadurch gekennzeichnet, dass** die Kraftwärmemaschine (6) und die Energieeinrichtung (5) in einer Einhausung (33) angeordnet sind.

14. Verwendung nach einem der Ansprüche 10 bis 13, **dadurch gekennzeichnet, dass** die Kraftwärmemaschine (6) elektrische Energie benötigt, und dass die benötigte elektrische Energie für die Kraftwärmemaschine (6) von einer elektrische Energie erzeugenden Energieeinrichtung (5) entnehmbar ist.

15. Verfahren zum Beheizen eines Volumens, insbesondere eines Gebäudes oder eines Gebäudeteils, mit Nutzwärme und/oder Prozesswärme
bei dem mit einer Energieeinrichtung in einem Gehäuse zumindest thermische Energie erzeugt wird,
bei dem die Nutzwärme und/oder Prozesswärme aus einem Teil der thermischen Energie aus der Energieeinrichtung gebildet wird, und
bei dem die nicht als Nutzwärme und/oder Prozesswärme gebildete thermische Energie Abwärme der Energieeinrichtung bildet, wobei die Abluft der Energieeinrichtung Wärmeträger der Abwärme ist,
**dadurch gekennzeichnet,**
**dass** zumindest ein Teil der Abluft mit der Abwärme aus dem Gehäuse der Energieeinrichtung einer Kraftwärmemaschine zugeführt wird, und
**dass** die der Kraftwärmemaschine zugeführte Abwärme in der Kraftwärmemaschine zumindest anteilig zu zusätzlicher Nutzwärme und/oder Prozesswärme umgesetzt wird, die der Nutzwärme und/oder Prozesswärme der Energieeinrichtung zugeführt wird, wodurch die Abluft gekühlt wird, und
**dass** die gekühlte Abluft dem Gehäuse der Energieeinrichtung zugeführt wird.

16. Verfahren nach Anspruch 15, **dadurch gekennzeichnet, dass** die Energieeinrichtung eine Kraft-Wärme-Kopplung umsetzt.

17. Verfahren nach Anspruch 16, **dadurch gekennzeichnet, dass** die Kraft-Wärme-Kopplung einen Antrieb umfasst, mit dem eine Generatoreinrichtung angetrieben wird, wobei beim Antreiben des Generators thermische Energie erzeugt wird, und wobei in der Generatoreinrichtung elektrische Energie erzeugt wird, mit welcher zumindest anteilig die Kraftwärmemaschine angetrieben wird.

18. Verfahren nach einem der Ansprüche 15 bis 17, **dadurch gekennzeichnet, dass** die Fördereinrichtung zumindest einen Ventilator umfasst.

19. Verfahren nach einem der Ansprüche 15 bis 18, **dadurch gekennzeichnet, dass** die Kraftwärmemaschine eine Gas-Flüssigkeit-Wärmepumpe umfasst, insbesondere eine Luft-Wasser-Wärmepumpe, bei der thermische Energie der Abwärme über ein Gas oder Gasgemisch, insbesondere über Luft, auf ein flüssiges Kältemittel, insbesondere Wasser, übertragen wird.

20. Verfahren zur Effizienzsteigerung einer Energieeinrichtung, insbesondere eines Blockheizkraftwerks, bei dem die Energieeinrichtung in einem Gehäuse Wärme erzeugt, die Nutzwärme und/oder Prozesswärme sowie Abwärme umfasst, **dadurch gekennzeichnet, dass** die Abwärme innerhalb einer eine Kraftwärmemaschine umfassenden Einhausung der Kraftwärmemaschine zum Umsetzen in Nutzwärme und/oder Prozesswärme zugeführt wird, wobei sich das Gehäuse in der Einhausung befindet.

21. Verfahren zur Effizienzsteigerung nach dem Oberbegriff des Anspruchs 20, **dadurch gekennzeichnet, dass** die Abwärme zum Umsetzen in Nutzwärme und/oder Prozesswärme einer an dem Gehäuse der Energieeinrichtung anordbaren Kraftwärmemaschine zugeführt wird.

22. Verwendung eines Schallschutzgehäuses oder eines Übersee-Containers als Einhausung (33) für eine Vorrichtung (1) zum Bereitstellen von Nutzwärme (3) und/oder elektrischer Energie nach einem der Ansprüche 1 bis 9, oder für ein Verfahren zum Beheizen eines Volumens, insbesondere eines Gebäudes oder eines Gebäudeteils, mit Nutzwärme und/oder Prozesswärme nach einem der Ansprüche 15 bis 19.
